# EUROPÄISCHE PATENTSCHRIFT

(11) **EP 0 474 892 B1**
(45) Veröffentlichungstag und Bekanntmachung des Hinweises auf die Patenterteilung: **10.04.1996**
(21) Anmeldenummer: 90117373.2
(22) Anmeldetag: 10.09.1990
(51) Int. Cl.: C12C 3/12

(54) **Verfahren zur Isomerisierung von Humulon in einem Kohlendioxid-Hopfenextrakt und ein Verfahren zur Gewinnung von Isohumulon daraus**
Process for the isomerisation of humulone in a carbon dioxide-hop extract and method for extracting the isohumulone
Procédé pour l'isomérisation d'acides alpha d'extraits d'humulon obtenus par dioxyde de carbone et méthode d'extraction de ces acides iso-alpha

(43) Veröffentlichungstag der Anmeldung: 18.03.1992
(73) Patentinhaber: FROMM, MAYER-BASS LIMITED, London W2 2DS (GB); Hopstabil Hopfenverarbeitungs-Gesellschaft mbH, D-85283 Wolnzach (DE)
(72) Erfinder: Paul, Herbert, Dipl.-Ing., D-8069 Geisenfeld (DE)
(74) Vertreter: Kolb, Helga, Dr. Dipl.-Chem.

(56) Entgegenhaltungen:
- F.KNORR, CHEMIE UND TECHNOLOGIE DES HOPFENS; 1972, Brauwelt Verlag, Nürnberg, Seiten 150-151

## Beschreibung

Die vorliegende Erfindung betrifft ein Verfahren zur Isomerisierung von Humulon in einem Kohlendioxid-Hopfenextrakt und ein Verfahren zur Gewinnung von Isohumulon aus einem Kohlendioxid-Hopfenextrakt.

Isohumulone sind Bitterstoffe für Bier, die durch Aufarbeitung des Kohlendioxid-Hopfenextrakts gewonnen werden.

Die bisher bekannten Verfahren zur ihrer Isolierung weisen eine Reihe von Nachteilen auf.

In der US-PS 3,952,061 wird die Isomerisierung von Humulon oder eines humulonhaltigen Materials zu Isohumulon beschrieben, wobei die Isomerisierung bei erhöhten Temperaturen und einem pH-Wert unterhalb von 9 in einem flüssigen Medium durchgeführt wird, das wenigstens ein Salz eines bivalenten Metalls oder von Cerium enthält.

Das Reaktionsmedium muß so gewählt werden, daß das Salz unter Bildung eines metallischen Kations und eines Anions dissoziiert und Humulon oder das humulonhaltige Material unter Bildung des Humlatanions dissoziiert. Das Metallion bildet dann einen Komplex mit dem Humulation, der bei erhöhter Temperatur isomerisiert wird. Nach der Isomerisierung des Komplexes wird das reine Isohumulon durch Ansäuern und anschließende konventionelle Aufarbeitungsmethoden gewonnen.

In der US-PS 3,952,061 wird als Reaktionsmedium eine Mischung aus Wasser und einem organischen Lösungsmittel, in dem Humulon löslich ist, empfohlen. Der Nachteil bei diesem Verfahren besteht in der Verwendung organischer Lösungsmittel und der nachfolgenden komplizierten Aufarbeitungsschritte. Gemäß den Beispielen muß nach dem Ansäuern mit Ether extrahiert werden, der Extrakt getrocknet und das Lösungsmittel im Rotationsverdampfer abdestilliert werden.

Die DE-OS 36 09 046 beschreibt ein Verfahren, gemäß dem in einer ersten Stufe die fraktionierte Abtrennung der Alphasäuren aus dem Kohlendioxid-Hopfenextrakt erfolgt, und daraufhin in einer nachfolgenden zweiten Stufe durch Erwärmung der erhaltenen wäßrigen Alphasäuren-Fraktion in Anwesenheit von nicht mehr als einem äquimolaren Alkali-Äquivalent bezüglich der vorhandenen Alphasäuren die Isomerisierung der Alphasäuren zu Isoalphasäuren (Isohumulon) durchgeführt wird.

Nach einer alternativen Ausführungsform dieses Verfahrens kann die Isomerisierung der Alphasäuren-Fraktion in Gegenwart anderer Anteile des Kohlendioxid-Hopfenextrakts erfolgen, so lange gewährleistet ist, daß nicht mehr als ungefähr 1 Basenäquivalent vorhanden ist, und der Ausgangs-pH-Wert nicht mehr als ungefähr 10 beträgt. Im weiteren Verlauf wird daraufhin - sofern dies angestrebt wird - die Isohumulon-Fraktion abgetrennt.

Dieses Verfahren, bei dem ohne Katalysator gearbeitet wird, hat die Nachteile, daß es sehr zeitaufwendig ist und daß bei der Isomerisierung nur eine 70 bis 75 %ige Ausbeute erzielt wird.

In der EP-0 363 023 ist ein Verfahren zur Herstellung von Isohumulon offenbart, bei dem ein Hopfenextrakt, der vorzugsweise unter Verwendung von Kohlendioxid als Extraktionsmittel hergestellt worden ist, mit einem festen Alkali- oder Erdalkalisalz, vorzugsweise Magnesiumsalz oder mit Magnesiumoxid zusammengemischt wird. Die Mischung wird dann erwärmt und zwar mindestens auf eine Temperatur von 80°C, um die Umwandlung der Alphasäure in die Isoalphasäure (Isohumulon) zu bewirken.

Der Nachteil bei diesem Verfahren besteht darin, daß das Reaktionsprodukt als Feststoff anfällt, der steinhart ist und gemahlen werden muß.

Der Extrakt wird anschließend einer Säurebehandlung unterworfen und dann mit Alkali, wie beispielsweise Kaliumhydroxid, extrahiert. Es muß also ein Ionenaustausch zwischen Kalium- und Magnesiumionen vorgenommen werden, um ein wasserlösliches Kalium-Isohumulon zu erhalten.

Nach Chemie und Technologie des Hopfens (Verlag Hans Karl Nürnberg 1972, S. 151) kann aus Hopfenextrakten durch Stoffe mit großen Oberflächen, z.B. Kieselgur, Aktivkohle oder Aluminiumoxid, die Umwandlung der Alphasäuren beschleunigt werden. Es wird jedoch auch darauf hingewiesen, daß wenn die üblichen Produktionsbedingungen bereits zu einer Alpha-Säurenumwandlungsquote von 55-60% führen, diese durch den Zusatz von Kieselgur kaum mehr erhöht werden kann.

Ziel der vorliegenden Erfindung ist es, ein verbessertes Verfahren zur Isomerisierung von Humulon im Kohlendioxid-Hopfenextrakt zu entwickeln, das die Nachteile der im Stand der Technik bekannten Verfahren nicht aufweist.

Dieses wird durch ein Verfahren zur Isomerisierung von Humulon in einem Kohlendioxid-Hopfenextrakt erreicht, das dadurch gekennzeichnet ist, daß Aluminium oder eine Aluminiumverbindung in einer solchen Konzentration zu einem Kohlendioxid-Hopfenextrakt gegeben wird, daß das Molverhältnis von Aluminium : Alphasäure (alpha-Humulon) 1 : 0,1 bis 1 : 6 beträgt und anschließend mit hoher Alkalihydroxidkonzentration bei einer Temperatur von 80 bis 160°C behandelt wird.

Weiterhin ist es ein Ziel der vorliegenden Erfindung, ein verbessertes Verfahren zur Gewinnung von Isohumulon aus einem Kohlendioxid-Hopfenextrakt zu entwickeln.

Dieses wird durch ein Verfahren zur Gewinnung von Isohumulon bzw. Alkaliisohumulon aus einem Kohlendioxid-Hopfenextrakt erreicht, das dadurch gekennzeichnet ist, daß man Alphasäure in einem Kohlendioxid-Hopfenextrakt gemäß den Ansprüchen 1 bis 7 isomerisiert und anschließend Isohumulon bzw. Alkaliisohumulon aus dem Extrakt gewinnt, indem man soviel temperiertes Wasser hinzugibt, daß der Isohumulon-Anteil 1 bis 10 % beträgt und die Temperatur auf 40 bis 45°C herabgesenkt wird und man nach weiterem Abkühlen auf Raumtemperatur auf konventionelle Weise die Alkaliisohumulone von den übrigen Bestandteilen reinigt und gegebenenfalls auf übliche Weise in Isohumulone umwandelt.

Bevorzugte Ausführungsformen des erfindungsgemäßen Verfahrens sind in den Unteransprüchen beschrieben.

Die Vorteile des erfindungsgemäßen Verfahrens liegen darin, daß die Isomerisierung aufgrund des verwendeten Reaktionsbeschleunigers Aluminium bzw. dessen Aluminiumsalze oder bevorzugt Aluminiumoxid innerhalb sehr kurzer Zeit zu nahezu 100 % erfolgt.

Das vorzugsweise verwendete unlösliche Aluminiumtrioxid wird durch Abfiltrieren oder Abdekantieren entfernt, beispielsweise im Rahmen der nachfolgenden konventionellen Reinigungsschritte.

Ein weiterer Vorteil des erfindungsgemäßen Verfahrens ist, daß so gut wir gar keine Nebenprodukte gebildet werden.

Die Erfindung beruht auf der Verwendung von Aluminium bzw. Aluminiumverbindungen, vorzugsweise Aluminiumoxid, bei der Isomerisierung von Humulon im Kohlendioxid-Hopfenextrakt. Das Molverhältnis von Aluminium : Alphasäure (Humulon) beträgt 1 : 0,1 bis 1 : 6, vorzugsweise 1 : 0,3 bis 1 : 1, besonders bevorzugt 1 : 0,6. Vorzugsweise wird Aluminium bzw. dessen Verbindungen im Überschuß zum Extrakt gegeben, um eine bessere Durchmischung mit dem Extrakt zu gewährleisten.

Die Reaktion wird in Gegenwart von Alkalihydroxid, vorzugsweise Kaliumhydroxid, bei einer Temperatur von vorzugsweise 92°C durchgeführt. Die Alkalihydroxidkonzentration im Extrakt muß sehr hoch sein, vorzugsweise beträgt das Molverhältnis von Kaliumhydroxid : Alphasäure im Extrakt 2 : 1.

Um die Bildung von Wasserstoff und die Gefahr einer Knallgasreaktion auszuschließen, werden vorzugsweise eine Aluminiumsalzverbindung und besonders bevorzugt Aluminiumoxid verwendet.

Beim erfindungsgemäßen Verfahren entsteht ein flüssig bis pastöser isomerisierter Kohlendioxid-Hopfenextrakt, der nicht steinhart wird wie bei dem in der EP-0 363 023 beschriebenen Verfahren. Dieser pastöse Aggregatzustand ist auch für den nicht-isomerisierten Ausgangsextrakt charakteristisch, der in Wasser aufgrund der sehr unpolaren Inhaltsstoffe praktisch unlöslich ist.

Der isomerisierte Extrakt zeichnet sich demgegenüber durch eine weitgehende Wasserlöslichkeit aus.

Bei Zusatz von vorzugsweise entmineralisiertem Wasser unter Rühren entsteht eine wäßrige Emulsion (pH-Wert zwischen pH 10 bis pH 12). In ihr liegen die Alkaliisohumulone gelöst vor.

Die Alkaliisohumulone werden aus dem isomerisierten Kohlendioxid-Hopfenextrakt gewonnen, indem man soviel temperiertes Wasser hinzugibt, daß die Temperatur auf 40 bis 45°C erniedrigt wird und der Isohumulon-Anteil nach dem Emulgieren mit Wasser 1 bis 10 %, vorzugsweise 5 bis 10 % beträgt.

Es ist möglich, sofort nach der Isomerisierung Wasser, das eine niedrigere Temperatur als 40 bis 45°C haben muß, hinzuzugeben, um nach dem Emulgieren mit Wasser eine Temperatur von 40 bis 45°C zu erhalten. Es ist allerdings auch möglich, den isomerisierten Extrakt auf 40 bis 45°C abkühlen zu lassen und bei Erreichen dieser Temperatur 40 bis 45°C warmes Wasser hinzuzugeben.

Nach weiterem Abkühlen auf Raumtemperatur werden die Isohumulone auf konventionelle Weise von den übrigen Bestandteilen gereinigt. Dieses geschieht beispielsweise dadurch, daß mit Kohlendioxid so lange begast wird, bis ein pH-Wert von ungefähr 9,4 erreicht wird. In einer ersten Filtration werden dann die ausgefällten Wachse abgetrennt. Anschließend wird die Lösung mit Kohlendioxid begast, bis ein pH-Wert von ungefähr 9,0 erreicht wird, und die Lösung mehrere Stunden lang stehengelassen. Dabei setzen sich die unlöslichen Bestandteile ab und eine reine Alkaliisohumulonlösung kann durch Abfiltrieren erhalten werden.

Das so gewonnene Filtrat enthält als Hauptbestandteil Isohumulon, vorliegend als Alkaliisohumulon. Es kann in einem Konzentrationsbereich von 3 bis 10 % gewonnen werden. Eine weitere Aufkonzentrierung ist zum Beispiel durch Umkehrosmose zu erreichen.

Die mittels der erfindungsgemäßen Verfahren gewonnenen Alkaliisohumulone bzw. Isohumulone können zum Würzen von Bier verwendet werden.

Der Kohlendioxid-Extrakt wird bei Verwendung von Aluminium bzw. dessen Salzen und bevorzugt Aluminiumoxid wesentlich schneller isomerisiert als bei sonst gleichen Reaktionsbedingungen. Im Hinblick auf diese nicht zu erwartende Reaktionsbeschleunigung wirkt Aluminium bzw. dessen Verbindungen und vorzugsweise Alminiumtrioxid katalytisch.

Eine weitere Beschleunigung der Reaktionsgeschwindigkeit tritt ein, wenn von stationären Bedingungen, wie sie beispielsweise im Trockenschrank vorliegen, auf nicht-stationäre Bedingungen, beispielsweise im Rotationsverdampfer übergegangen wird.

Für die großtechnische Herstellung von isomerisiertem Kohlendioxid-Extrakt ist deshalb die Verwendung eines geeigneten Rühr- und Umpumpsystems, bei dem eine ständige Durchmischung von Extrakt und Katalysator gegeben ist und der Luftsauerstoff möglichst gering gehalten wird, empfehlenswert.

Als Material der Reaktionsgefäße kommt bevorzugt Glas, aber auch Edelstahl in Betracht. Wichtig ist, daß keine Kontamination mit Eisenionen erfolgt, um zu vermeiden, daß unerwünschte Nebenprodukte gebildet werden und eine reduzierte Ausbeute an Isohumulon bei gleichzeitigem Verlust an Alphasäure erhalten wird.

Ohne daß darin eine Beschränkung bestehen soll, wird die Erfindung nachfolgend im einzelnen mit Bezugnahme auf die Beispiele erläutert.

Die in den nachfolgenden Tabellen aufgeführten Prozentangaben im Hinblick auf die "Wiederfindung Alphasäure" beziehen sich auf den isomerisierten und nicht-isomerisierten Anteil.

### Beispiel 1

zeigt den Einfluß von Aluminium bzw. Aluminiumoxid auf die Isomerisierungsrate.

Der Kohlendioxid-Hopfenextrakt wurde bei 110°C im Trockenschrank isomerisiert. Das molare Verhältnis von Kaliumhydroxid zu Alphasäure betrug 2:1.

Die Ergebnisse sind in der nachfolgende Tabelle 1 aufgeführt.

**Tabelle 1**

| | Reaktionszeit (Min.) | Isomerisierung % | Wiederfindung Alphasäure % | Wiederfindung Betasäure % |
|---|---|---|---|---|
| Reaktionsgefäß | 60 | 18,6 | 100,2 | 95,5 |
| aus Glas | 90 | 24,7 | 102,3 | 92,8 |
| aus Glas | 120 | 49,8 | 104,5 | 83,6 |
| aus Glas | 240 | 71,9 | 104,5 | 93,1 |
| | | | | |
| Eintauchen eines Aluminiumstäbchens | 60 | 92,3 | 95,6 | 92,7 |
| in das Reaktionsgefäß aus Glas | 180 | 96,7 | 96,7 | 63,8 |
| | | | | |
| Reaktionsgefäß aus Aluminium | 60 | 101,7 | 102,6 | 84,1 |
| | | | | |
| Al₂0₃ im Extrakt | 60 | 97,8 | 101,6 | 62,7 |
| | 180 | 100,0 | 100,9 | 45,8 |
| | | | | |
| Eintauchen eines | 60 | 25,7 | 71,4 | 92,2 |
| Eisenstäbchens in | 90 | 76,1 | 102,8 | 93,5 |
| das Reaktionsgefäß | 120 | 74,1 | 87,9 | 88,1 |
| aus Glas | 240 | 74,8 | 80,8 | 59,1 |

Aus Tabelle 1 ist ersichtlich, daß der Einfluß von Aluminium bzw. Al₂O₃ von entscheidender Bedeutung im Hinblick auf eine vollständige Isomerisierung der Alphasäure in Isohumulon ist.

Die schlechtesten Ergebnisse werden ohne Verwendung von Aluminium bzw. Aluminiumoxid erzielt. Bei Verwendung von Eisen ist die Umsetzung zwar wesentlich besser als ohne dessen Zugabe, allerdings wird maximal nur eine ca. 75 %ige Isomerisierung erreicht.

### Beispiel 2

zeigt den Einfluß des Molverhältnisses Kaliumhydroxid : Alphasäure auf die Isomerisierungsrate.

Es wurde bei 110°C im Trockenschrank isomerisiert, wobei die Reaktionszeit 60 Min. betrug.

Die nachfolgende Tabelle 2 zeigt die erhaltenen Ergebnisse.

**Tabelle 2**

| Katalysator | Molverhältnis KOH : Alphasäure | Isomerisierung % | Wiederfindung Alphasäure % | Wiederfindung Betasäure % |
|---|---|---|---|---|
| -- | 2 : 1 | 24,0 | 100,5 | 93,6 |
| -- | 1 : 1 | 22,0 | 76,9 | 98,9 |
| Aluminium | 2 : 1 | 96,3 | 98,6 | 84,1 |
| Aluminium | 1 : 1 | 27,1 | 90,0 | 87,6 |

Ein Molverhältnis 2 : 1 = KOH : Alphasäure ist notwendig, um eine befriedigende Ausbeute zu erreichen. Bei zu geringer KOH-Konzentration ist die Isomerisierung unzureichend. Gleichzeitig entstehen unter Verlust an Alphasäuren unerwünschte Nebenprodukte.

### Beispiel 3

betrifft den Einfluß verschiedener Hopfensorten.

Um eine mögliche Beeinflussung der Isomerisierungsreaktion durch bestimmte Hopfensorten zu untersuchen, wurden entsprechende Versuche durchgeführt. Hopfensorten unterscheiden sich im Verhältnis der Homologen von Alpha- und Betasäuren. Auch ihr Wachsanteil ist variabel.

Die Versuche wurden bei 110°C im Trockenschrank durchgeführt. Das Molverhältnis KOH : Alphasäure betrug 2 : 1. Das Molverhältnis von Alphasäure zu Aluminiumoxid betrug 2,6 : 1. Die nachfolgende Tabelle 3 zeigt die erhaltenen Ergebnisse.

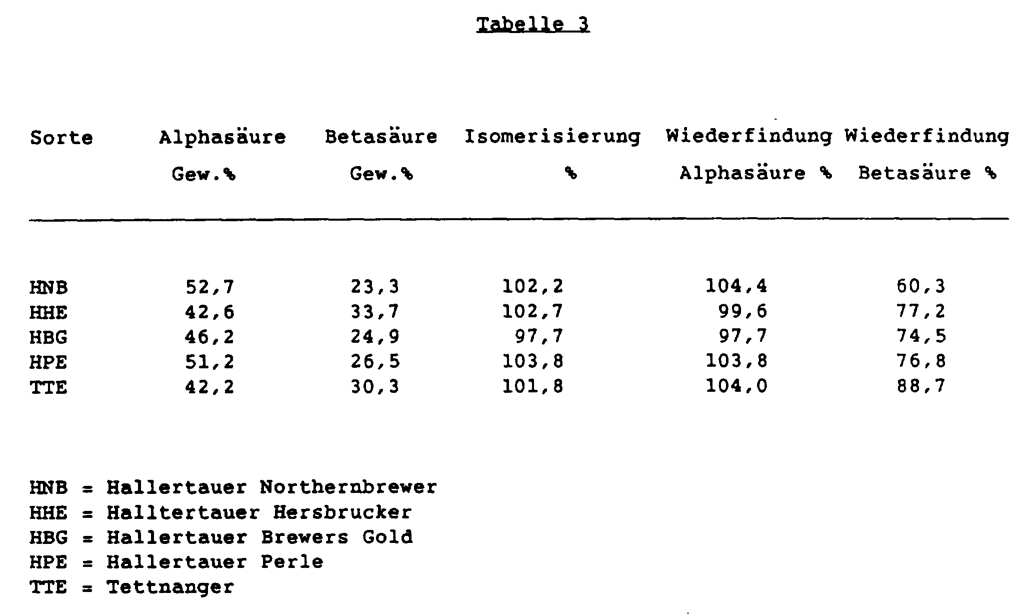

Ein Einfluß der Hopfensorte scheint somit nicht vorzuliegen.

### Beispiel 4

betrifft den Einfluß der Temperatur und der Durchmischung auf die Isomerisierungsrate.

Die Versuchsbedingungen waren die gleichen wie zuvor beschrieben. Es wurde Aluminiumoxid als Aluminiumverbindung verwendet. Die Temperatur wurde variiert. Ferner wurden Versuche stationär (im Trockenschrank) wie auch mit kontinuierlicher Durchmischung (am Rotationsverdampfer) durchgeführt.

Die erhaltenen Ergebnisse sind in der nachfolgenden Tabelle 4 aufgeführt.

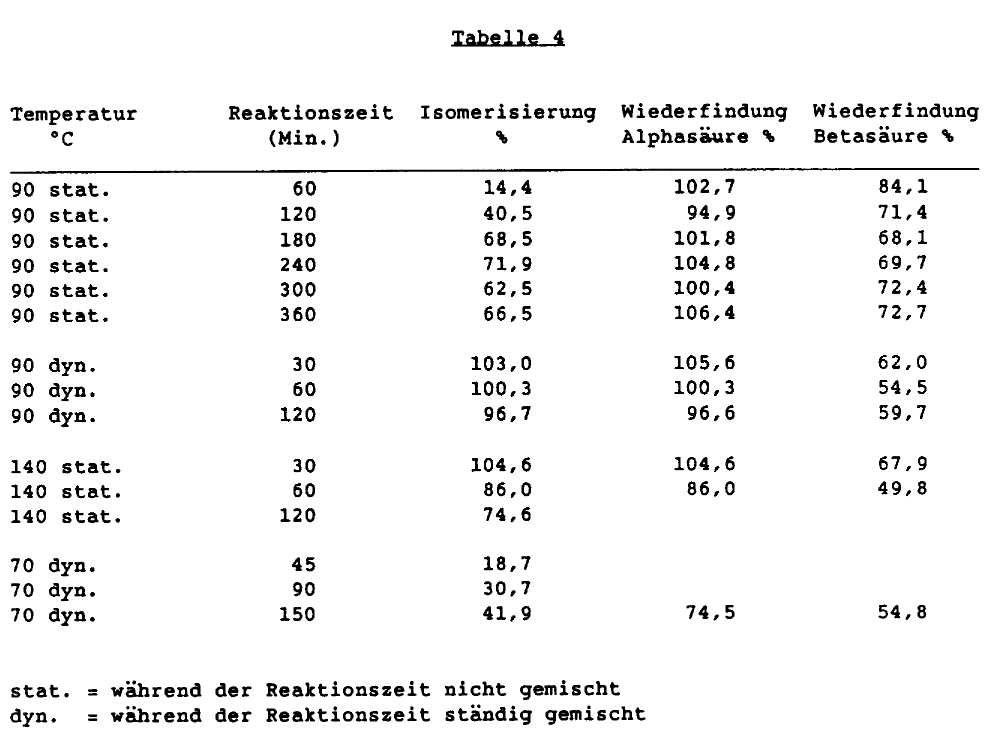

Aus der Tabelle ist ersichtlich, daß sowohl die Temperatur wie auch die Durchmischung einen entscheidenden Einfluß auf die Isomerisierungsrate haben.

Aus technologischen Gründen ist eine Temperatur von 92 bis 95°C (Siedepunkt von Wasser) vorteilhaft. Bei guter Durchmischung von Extrakt und Katalysator ist - so zeigten weitere Versuche - eine Reaktionszeit von 15 bis 30 Min. ausreichend, um eine Isomerisierung von 95 bis 100 % zu erzielen.

Für die Isomerisierung bei 140°C im Trockenschrank ist eine 30minütige Reaktionszeit ausreichend, um eine 100 %ige Isomerisierung zu erzielen.

Bei längerer Inkubationszeit bilden sich verstärkt Nebenprodukte.

### Beispiel 5

zeigt den Einfluß des Molverhältnisses Aluminium : Alphasäure auf die Isomerisierungsrate.

Der Kohlendioxid-Hopfenextrakt wurde im Rotationsverdampfer bei 92°C isomerisiert. Als Katalysator wurde Al₂O₃ verwendet. Das Molverhältnis KOH : Alphasäure betrug 2 : 1. Es wurden 4,2 g Alphasäure eingesetzt. Das Molverhältnis Aluminium : Alphasäure wurde variiert.

Die erhaltenen Ergebnisse sind in Tabelle 5 aufgeführt.

**Tabelle 5**

| Molverhältnis Aluminium:Alphasäure | Isomerisierung % | Wiederfindung Alphasäure % | Wiederfindung Betasäure % |
|---|---|---|---|
| 1 : 0,6 | 102,3 | 102,3 | 66,3 |
| 1 : 1,2 | 98,3 | 102,4 | 83,1 |
| 1 : 3,0 | 96,2 | 103,4 | 89,9 |
| 1 : 5,8 | 90,3 | 104,4 | 91,7 |
| 1 : 10,0 | 45,6 | 94,2 | 96,7 |

Aus Tabelle 5 ist ersichtlich, daß keine zufriedenstellenden Ergebnisse bei einem Molverhältnis Aluminium : Alphasäure über 1 : 6 erzielt werden. Die Isomerisierung sollte vorzugsweise bei einem Molverhältnis von 1 : 0,6 durchgeführt werden.

### Beispiel 6

zeigt den Einfluß der zugegebenen Kaliumhydroxidkonzentration auf die Konzentration der Betasäuren und das Vorkommen von Chlorophyll im Extrakt.

### Bedingungen bei der Isomerisierung des Kohlendioxid-Hopfenextrakts:

| | |
|---|---|
| Molverhältnis Aluminium : Alphasäure: | 1:0,6 |
| Molverhältnis KOH : Alphasäure: | 2,2:1 |
| Es wurde 54 % KOH hinzugegeben. | |
| Isomerisierungstemperatur: | 92°C |

### Bedingungen bei der Aufarbeitung des isomerisierten Kohlendioxid-Hopfenextrakts:

| | |
|---|---|
| Menge des zugegebenen entmineralisierten Wassers: | 1 1 |
| Temperatur des zugegebenen entmineralisierten Wassers: | 25°C |

Absenken des pH-Werts auf 9,0-9,2 mittels Einleiten von Kohlendioxidgas in die wäßrige Emulsion und anschließendes einmaliges Filtrieren.

Die in der folgenden Tabelle 6 enthaltenen Werte wurden nach dem Filtrieren im Filtrat ermittelt.

**Tabelle 6**

| Extrakt-Nr. | Konzentration der zugegebenen KOH-Lösung | Konzentration der Betasäure Gew.% | Vorkommen von Chlorophyll |
|---|---|---|---|
| 1 | 30 % | 6,0 % | ja |
| 2 | 26 % | 6,6 % | ja |
| 3 | 54 % | 1,2 % | nein |
| 4 | 56 % | 1,6 % | nein |

Wie aus Tabelle 6 ersichtlich ist, besteht ein weiterer Vorteil des erfindungsgemäßen Verfahrens darin, daß Betasäuren nur in geringem Maße gelöst werden und Chlorophyll praktisch gar nicht. Dieses ist jedoch von den Bedingungen bei der Isomerisierung abhängig.

So muß der Anteil an Alkalihydroxid mit möglichst wenig Wasser gelöst werden. Wird ein höherere Wasseranteil zugesetzt, dann lösen sich wesentlich mehr Betasäuren und beonders Chlorophyll. Dieses kann dann in den anschließenden Reinigungsschritten nicht mehr abgetrennt werden und geht somit in die am Schluß erhaltene, klare Kaliumisohumulonlösung über.

### Beispiel 7

Es wurde im Rotationsverdampfer isomerisiert. Die Reaktionsbedingungen waren folgende:

| | |
|---|---|
| Einsatz an Extrakt: | 256,5 g |
| Anteil an Alphasäure im Extrakt: | 111,3 g (MG 357,78 g) |
| Zusatz von Al₂O₃ (MG 101,96 g) : | 12,85 g |

Das entspricht einem Molverhältnis von Aluminium : Alphasäure = 1 : 0,6.
- Zusatz an KOH:: 38,57 g (MG 56.11) gelöst in 32,8 g destilliertem Wasser (54 % KOH-Lösung)

Dieses entspricht einem Molverhältnis von KOH : Alphasäure = 2,2 : 1.

Inkubation: 20 Min. im kochenden Wasserbad (Isomerisierungstemperatur: 92°C).
- Ergebnis:: Isomerisierung: 99,5 %
Wiederfindung Alphasäure: 102,5 %
Wiederfindung Betasäure: 84,2 %

### Zusammensetzung des isomerisierten Extraktes:

- Alphasäure:: 0,9 Gew.%
- Betasäure:: 20,7 Gew.%
- Isoalphasäure:: 35,0 Gew.%

Es resultiert eine hohe Isomerisierungsrate. Versuche unter sonst gleichen Bedingungen jedoch mit längeren Inkubationszeiten führten zu einer Abnahme der Isomerisierungsrate und zu einer Zunahme von unerwünschten Nebenprodukten.

### Beispiel 8

Im folgenden Versuch wird die Gewinnung der Kaliumisohumulone aus dem gemäß Beispiel 7 isomerisierten Kohlendioxid-Extrakt beschrieben.

Die Menge des pastösen Extraktes wurde unmittelbar nach der Isomerisierung mit der entsprechenden Menge (beispielsweise 1 1) an temperiertem (Wassertemperatur beispielsweise 25°C) und destilliertem Wasser unter Rühren vermischt, so daß die Isohumulonkonzentration 7 bis 10 % (beispielsweise 8,5 %)betrug und die Temperatur der Emulsion bei 40 bis 45°C (beispielsweise 40°C) lag. Nach Abkühlen auf Raumtemperatur wurde mit Kohlendioxid so lange begast, bis ein pH-Wert von 9,4 erreicht wurde.

In einer ersten Filtration wurden die ausgefällten Wachse abgetrennt. Anschließend wurde die Lösung mit Kohlendioxid weiter begast, bis ein pH-Wert von 9,0 erreicht worden war. Die Lösung blieb 10 Std. stehen. Dabei setzten sich die unlöslichen Bestandteile ab. Nach deren Entfernen wurde die überstehende Lösung filtriert und analysiert.

Isoalphasäure wurde zu 88,5 % wiedergefunden. Weiterhin enthielt die Lösung noch 0,02 % an Alphasäuren und 0,17 % an Betasäuren. Diese Prozentangaben beziehen sich auf die Ausgangsstoffe.

Die Alpha- und Betasäuren können durch entsprechende pH-Wert Einstellung wie z.B. mit Kohlendioxidgas ausgefällt und anschließend abgetrennt werden.

Die gewonnene Kaliumisohumulon-Lösung ist klar, hat eine gelbbraune Farbe und enthält Kaliumisohumulon in einer Konzentration von 7 bis 10 %. Durch geeignete Verfahren zur Aufkonzentrierung (z.B. Umkehrosmose) kann ein Isohumulongehalt von 20 bis 25 % eingestellt werden.

## Patentansprüche

1. Verfahren zur Isomerisierung von Humulon in einem Kohlendioxid-Hopfenextrakt, dadurch gekennzeichnet, daß Aluminium oder eine Aluminiumverbindung in einer solchen Konzentration zu einem Kohlendioxid-Hopfenextrakt gegeben wird, daß das Molverhältnis von Aluminium : Alphasäure (Alphahumulon) 1 : 0,1 bis 1 : 6 beträgt und das Gemisch anschließend mit hoher Alkalihydroxidkonzentration bei einer Temperatur von 80 bis 160°C behandelt wird.

2. Verfahren nach Anspruch 1, dadurch gekennzeichnet, daß als Aluminiumverbindung Al₂O₃ verwendet wird.

3. Verfahren nach Ansprüchen 1 oder 2, dadurch gekennzeichnet, daß als Alkalihydroxid Kaliumhydroxid verwendet wird.

4. Verfahren nach Ansprüchen 1 bis 3, dadurch gekennzeichnet, daß das Molverhältnis von Kaliumhydroxid : Alphasäure 2 : 1 beträgt.

5. Verfahren nach Ansprüchen 1 bis 4, dadurch gekennzeichnet, daß die Isomerisierung bei 92°C durchgeführt wird.

6. Verfahren nach Ansprüchen 1 bis 5, dadurch gekennzeichnet, daß das Molverhältnis von Aluminium : Alphasäure 1 : 0,3 bis 1 : 1 beträgt.

7. Verfahren nach Ansprüchen 1 bis 6, dadurch gekennzeichnet, daß das Molverhältnis von Aluminium : Alphasäure 1 : 0,6 beträgt.

8. Verfahren zur Gewinnung von Isohumulon bzw. Alkaliisohumulon aus einem Kohlendioxid-Hopfenextrakt, dadurch gekennzeichnet, daß man Humulon in einem Kohlendioxid-Hopfenextrakt gemäß den Ansprüchen 1 bis 7 isomerisiert und anschließend Isohumulon aus dem Extrakt gewinnt, indem man so viel temperiertes Wasser hinzugibt, daß der Isohumulon-Anteil 1 bis 10 % beträgt und die Temperatur auf 40 bis 45°C herabgesenkt wird und man nach weiterem Abkühlen auf Raumtemperatur auf konventionelle Weise die Alkaliisohumulone von den übrigen Bestandteilen reinigt und gegebenenfalls auf übliche Weise in Isohumulone umwandelt.

9. Verfahren nach Anspruch 8, dadurch gekennzeichnet, daß man so viel temperiertes Wasser hinzugibt, daß der Isohumulon-Anteil 5 bis 10 % beträgt.

10. Verfahren nach Ansprüchen 8 bis 9, dadurch gekennzeichnet, daß das Wasser entmineralisiert ist.

## Claims

1. Process for isomerising humulone in a carbon dioxide-hop extract, characterised in that aluminium or an aluminium compound is added to a carbon dioxide-hop extract at a concentration such that the molar ratio of aluminium : alpha acid (alpha-humulone) is 1 : 0.1 to 1 : 6, and the mixture is then treated at high alkali metal hydroxide concentration at a temperature of 80 to 160°C.

2. Process according to claim 1, characterised in that Al₂O₃ is used as the aluminium compound.

3. Process according to claims 1 or 2, characterised in that potassium hydroxide is used as the alkali metal hydroxide.

4. Process according to claims 1 to 3, characterised in that the molar ratio of potassium hydroxide : alpha acid is 2 : 1.

5. Process according to claims 1 to 4, characterised in that isomerisation is carried out at 92°C.

6. Process according to claims 1 to 5, characterised in that the molar ratio of aluminium : alpha acid is 1 : 0.3 to 1 : 1.

7. Process according to claims 1 to 6, characterised in that the molar ratio of aluminium : alpha acid is 1 : 0.6.

8. Process for recovering isohumulone or alkali-isohumulone from a carbon dioxide-hop extract, characterised in that humulone is isomerised in a carbon dioxide-hop extract according to claims 1 to 7, and then isohumulone is recovered from the extract by adding so much temperature-controlled water that the isohumulone proportion is 1 to 10 % and the temperature is reduced to 40 to 45°C, and after further cooling to room temperature in conventional manner, the alkali-isohumulones are removed from the remaining constituents and optionally converted to isohumulones in conventional manner.

9. Process according to claim 8, characterised in that so much temperature-controlled water is added that the isohumulone proportion is 5 to 10 %.

10. Process according to claims 8 to 9, characterised in that the water is demineralised.

## Revendications

1. Procédé d'isomérisation d'humulone dans un extrait de houblon obtenu par extraction au dioxyde de carbone, caractérisé en ce que l'on ajoute, à un extrait de houblon obtenu par extraction au dioxyde de carbone, de l'aluminium ou un composé de l'aluminium en une concentration telle que le rapport molaire de l'aluminium à l'acide alpha (alpha-humulone) vaut de 1/0,1 à 1/6 et en ce que l'on traite ensuite le mélange avec un hydroxyde alcalin présent en une forte concentration, et à une température valant de 80°C à 160°C.

2. Procédé conforme à la revendication 1, caractérisé en ce que l'on utilise de l'oxyde d'aluminium en tant que composé de l'aluminium.

3. Procédé conforme à la revendication 1 ou 2, caractérisé en ce que l'on utilise de l'hydroxyde de potassium en tant qu'hydroxyde alcalin.

4. Procédé conforme à l'une des revendications 1 à 3, caractérisé en ce que le rapport molaire de l'hydroxyde de potassium à l'acide alpha vaut 2/1.

5. Procédé conforme à l'une des revendications 1 à 4, caractérisé en ce que l'isomérisation est effectuée à 92°C.

6. Procédé conforme à l'une des revendications 1 à 5, caractérisé en ce que le rapport molaire de l'aluminium à l'acide alpha vaut de 1/0,3 à 1/1.

7. Procédé conforme à l'une des revendications 1 à 6, caractérisé en ce que le rapport molaire de l'aluminium à l'acide alpha vaut 1/0,6.

8. Procédé d'obtention d'isohumulone ou d'un sel de métal alcalin et d'isohumulone, à partir d'un extrait de houblon obtenu par extraction au dioxyde de carbone, caractérisé en ce que l'on isomérise l'humulone présente dans un extrait de houblon obtenu par extraction au dioxyde de carbone, selon un procédé conforme à l'une des revendications 1 à 7, et en ce que l'on obtient ensuite l'isohumulone à partir de l'extrait, en y ajoutant de l'eau en une quantité et à une température telles que la proportion d'isohumulone vaille de 1 à 10 % et que la température s'abaisse jusqu'à 40-45°C, en séparant des autres constituants, de façon classique et après refroidissement ultérieur jusqu'à la température ambiante, le sel de métal alcalin et d'isohumulone, et en le transformant éventuellement en isohumulone, de la façon habituelle.

9. Procédé conforme à la revendication 8, caractérisé en ce que l'on ajoute une quantité d'eau thermostatée telle que la proportion d'isohumulone vaut de 5 à 10 %.

10. Procédé conforme à l'une des revendications 8 et 9, caractérisé en ce que l'eau est déminéralisée.
